# EUROPEAN PATENT APPLICATION

(11) **EP 4 851 018 A1**
(43) Date of publication of application: **09.12.2026**
(21) Application number: 25181269.9
(22) Date of filing: 06.06.2025
(51) Int. Cl.: B62D 21/11, B62D 21/15, B62D 25/08

(54) **BODY STRUCTURE FOR A FRONT CARRIAGE OF A VEHICLE AND VEHICLE**

(71) Applicant: Volvo Car Corporation, 405 31 Göteborg (SE)
(72) Inventor: ENGLUND, Thomas, 40531 Göteborg (SE); OLSSON, Magnus, 40531 Göteborg (SE); OHNELL, Hans, 40531 Göteborg (SE); WEGLIN, Joakim, 40531 Göteborg (SE); VAN DER PUTTEN, Zef, 40531 Göteborg (SE); LEXBERG, Erik, 40531 Göteborg (SE)
(74) Representative: Kransell & Wennborg KB

(57) **Abstract**

The disclosure relates to a body structure (10) for a front carriage of a vehicle (5), the body structure (10) comprising: a first side member (20a), a second side member (20b), a first component (30), a second component (40), and a third component (50) respectively extending along two of a lateral, longitudinal, and vertical directions of the body structure (10) , and arranged and connected, such that the first component (30), the second component (40), and the third component (50) can support shear forces extending in the lateral, longitudinal, and/or vertical directions. The disclosure further relates to a vehicle (5).

## Description

### TECHNICAL FIELD

The present disclosure relates to a body structure for a front carriage of a vehicle and a vehicle.

### BACKGROUND ART

Many vehicles comprise a stiff body structure for a front carriage to provide structural rigidity against shear forces acting thereon. However, such body structure is often heavy weight, which degrades the fuel and/or battery efficiency of the vehicle. Further, such body structure is often bulky, requiring substantial space for arrangement, and excessive raw materials which is unsustainable.

### SUMMARY

It is an objective of the present disclosure to further improve the body structure for a front carriage of a vehicle.

The problem is at least partially solved or alleviated by the subject matter of the independent claims of the present disclosure, wherein further examples are incorporated in the dependent claims.

According to a first aspect, there is provided a body structure for a front carriage of a vehicle, the body structure comprising:
- a first side member arranged at a first lateral end of the body structure and extending along a longitudinal direction of the body structure and along a vertical direction of the body structure;
- a second side member arranged at a second lateral end of the body structure extending along the longitudinal direction of the body structure and along the vertical direction of the body structure, wherein the first lateral end and the second lateral end are opposite to one another;

- a first component connecting a vertically lower end of the first side member and a vertically lower end of the second side member, and extending along the longitudinal direction of the body structure and along a lateral direction of the body structure, such that the first component can support shear forces extending in the longitudinal and/or lateral direction;
- a second component connecting a vertically upper end of the first side member and a vertically upper end of the second side member, and extending along the longitudinal direction of the body structure and along the lateral direction of the body structure, such that the second component can support shear forces extending in the longitudinal and/or lateral direction; and
- a third component connecting the first side member to the second side member, and extending along the lateral direction of the body structure and along the vertical direction of the body structure, such that the third component can support shear forces extending in the vertical and/or lateral direction.

The vehicle may refer to a motor vehicle. The front carriage of the vehicle may be a portion of the vehicle starting from a border of an inner cabin of the vehicle in the longitudinal direction of the vehicle. Specifically, the front carriage of the vehicle is in front of the inner cabin of the vehicle, in the direction of the forward traveling direction of the vehicle. The longitudinal axis of the vehicle may be an axis parallel to the direction of straight travel of the vehicle, or simply a forward and backward direction. A lateral axis of the vehicle may be an axis parallel to sideways with respect to the direction of travel of the vehicle. The longitudinal direction is normal to the lateral direction, and together forms a plane. A vertical direction of the vehicle may be a direction orthogonal to the plane formed by the longitudinal direction and the lateral direction. The first side member may extend along the longitudinal and/or vertical directions of the vehicle comparatively more than an extension in the lateral direction of the vehicle. The second side member may extend along the longitudinal and/or vertical directions of the vehicle comparatively more than an extension in the lateral direction of the vehicle. The first component may extend along the longitudinal and/or lateral directions of the vehicle comparatively more than an extension in the vertical direction of the vehicle. The second component may extend along the longitudinal and/or lateral directions of the vehicle comparatively more than an extension in the vertical direction of the vehicle. The third component may extend along the vertical and/or lateral directions of the vehicle comparatively more than an extension in the longitudinal direction of the vehicle. Herein, the term "connect" may refer to a direct connection, i.e., without an intermediary component, or an indirection connection, i.e., with an intermediary component. The term "connect" may refer to fastening by coupling means comprising a bolted joint. Further herein, the term "substantially" refers to a range in a relative scale with respect to another. For instance, A substantial extension along a first axis with respect to an extension along a second axis may refer to a relatively longer extension along the first axis in comparison to the extension along the second axis.

The third component may connect the first component to the second component.

The first side member may comprise at least one deformable portion. The at least one deformable portion may be more prone to deformability than other parts. Thus, herein, the at least one deformable portion may also be referred to as at least one structurally weakened portion. When a force is exerted onto the first side member, the at least one deformable portion may bend, relatively more than the other portions of the first side member, resulting in an extension in any direction of the body structure. For instance, the at least one deformable portion may run along the vertical direction of the body structure and on the first side member, such that upon an exertion of a longitudinal force onto the first side member, e.g., a frontal crash, the first side member crumples, or folds, and forms the crease along the vertical direction of the body structure. This may result in the bent portion of the first side member extending laterally. The first side member may comprise two, three, or so forth, of such deformable portion for instance spaced from one another along the longitudinal direction of the body structure and on the first side member, so as to improve the impact absorbed by the force exerting onto the first side member. The third component may be connected to the at least one deformable portion of the first side member, such that connection therebetween loosens upon impact to the body structure. The at least one deformable portion of the first side member may be achieved through a structure feature. For instance, such portion may be thinned, and/or bent at an angle such that the first side member is not straight along a direction of the body structure. Additionally or alternatively, the at least one deformable portions may comprise or be a connection, e.g., joints or hinges, connecting segments of the first side member. Additionally or alternatively, the at least one deformable portion may comprise or be a fracture point prone to break in a predictable manner upon an impact. Alternatively or additionally, deformability may be controlled or adjusted by the material used for the at least one deformable portion. For instance, materials with specific properties such as ductility and toughness may be selected and/or treatments such as annealing may be applied so as to enhance such properties.

The second side member may comprise at least one deformable portion. The at least one deformable portion may be more prone to deformability than other parts. When a force is exerted onto the second side member, the at least one deformable portion may bend, relatively more than the other portions of the second side member, resulting in an extension in any direction of the body structure. For instance, the at least one deformable portion may run along the vertical direction of the body structure and on the second side member, such that upon an exertion of a longitudinal force onto the second side member, e.g., a frontal crash, the second side member crumples, or folds, and forms the crease along the vertical direction of the body structure. This may result in the bent portion of the second side member extending laterally. The second side member may comprise two, three, or so forth, of such deformable portion for instance spaced from one another along the longitudinal direction of the body structure and on the second side member, so as to improve the impact absorbed by the force exerting onto the second side member. The third component may be connected to the at least one deformable portion of the second side member, such that connection therebetween loosens upon impact to the body structure. The at least one deformable portion of the second side member may be achieved through a structure feature. For instance, such portion may be thinned, and/or bent at an angle such that the second side member is not straight along a direction of the body structure. Additionally or alternatively, the at least one deformable portion may comprise or be a connection, e.g., joints or hinges, connecting segments of the second side member. Additionally or alternatively, the at least one deformable portion may comprise or be a fracture point prone to break in a predictable manner upon an impact. Alternatively or additionally, deformability may be controlled or adjusted by the material used for the at least one deformable portion. For instance, materials with specific properties such as ductility and toughness may be selected and/or treatments such as annealing may be applied so as to enhance such properties.

Herein the term "loosening" may refer to a process of making the referred connection less firmly fixed or decoupling the connection entirely.

The structural features of the first component, the second component, and the third component and connections thereof according to a first aspect of the present disclosure as above in particular contribute to providing a stiffness against shear forces extending in the longitudinal, lateral, and vertical direction. In particular, the first, second, and third components in combination provide the structural integrity in a weight-efficient manner, which reduces the noised and vibration transferred to the cabin, whilst the connected first and side members, in particular the local weak portions thereof, ensures that the impact is effectively absorbed by loosening its connection to the first, second, and/or third components. This in turn contributes to providing overall stiffness at the front carrier of the vehicle, ensuring the safety of the occupant(s) of the vehicle. Further, the said components extend largely along two directions, largely reducing the size of the structural features with respect to conventional components extending substantially in all three directions. This contributes to reducing the weight of the front carriage of the vehicle, reducing the overall weight of the vehicle. This in turn improves the fuel and/or electrical efficiency of the vehicle. Further, the achieved reduced sizes of the conventional components translate to a sustainable solution.

Thus, the body structure according to the first aspect of the present disclosure achieves, among others, improved weight efficiency, sustainability, and stiffness.

According to an example, the first component comprises or is a deformable subframe connecting to the vertically lower end of the first side member, connecting to the vertically lower end of the second side member, and connecting to the third component, such that the connection is loosened upon deformation of the deformable subframe.

The subframe may comprise a structural feature at particular location(s) thereof, which renders the corresponding portion of the subframe comparatively more prone to deformability than other parts. For instance, the first component may be bent at an angle at a substantially central point along the longitudinal direction of the body structure. Alternatively or additionally, the first component may be comparatively thinned at a substantially central point along the lateral direction of the body structure, with the thinned line running through the first component along the lateral direction. Alternatively or additionally, deformability of the subframe may be controlled or adjusted by the material properties of the material used. In case of a force acting on the subframe, e.g., when a vehicle collides with another object, the connections of the first component to the first side member, the second side member, and the third component may become loose. This may be caused by the deformation. The connections of any one or more of the first component, the second component, and the third component may be loosened when a force acts on the body structure.

In case of a collision, providing an additional impact absorption mechanism becomes highly relevant to prevent transferring the impact to the occupant(s) of the vehicle, ensuring safety. The body structure according to the example above achieves such safety through the deformable subframe, and further through the loosening mechanism of the parts comprised in the body structure.

According to an example, the third component comprises a first supporting member connecting the first side member to the second side member, and extending in the lateral direction of the vehicle structure.

The first supporting member may extend along the lateral direction of the vehicle structure comparatively more than an extension along the longitudinal and the vertical directions.

The body structure according to the example above achieves an improved mechanical rigidity and stability along the lateral direction of the body structure.

According to an example, the third component comprises at least one first rod connecting substantially middle of the first supporting member at one end to substantially one of two longitudinally extending edges along the lateral direction of the first component at the other end.

Herein the phrase "substantially middle" refers to a generally around the central region, i.e., within a range around the central point along an axis. The range may be a third of the total length of the referred component along an axis. Alternatively, the range may be a fourth of the total length of the referred component along an axis. Alternatively, the range may be a fifth of the total length of the referred component along an axis. The connection closer to a central region may provide improved mechanical rigidity.

The phrase "substantially middle" may be interchangeably used with "middle section". A middle section is a section that is located at a distance from both ends, e.g. comprising a center. For instance, in case the first supporting member is divided into 3 equal portions, the middle section is the portion arranged between the other two. In another example, in case the first supporting member is divided into 5 equal portions, the middle section is the portion arranged between the two portions on respective sides.

The first component may be arranged at a vertically lower point with respect to the first supporting member. Thus, the at least one first rod arranged according to the example above forms part of a triangular structure, which improves structural stability. Further, such structure may distribute weight and stress evenly across the sides and vertices, reducing the risk of structural failure. Moreover, the triangular structure requires less material to achieve the same rigidity as other shapes, contributing to reduced weight and improved material usage.

According to an example, the third component comprises at least one second rod connecting substantially one of two ends of the first supporting member at one end to substantially middle of the first component along the lateral direction at the other end.

The first component may be arranged at a vertically lower point with respect to the first supporting member. Thus, the at least one second rod arranged according to the example above forms part of an inverted triangular structure, which improves handling of dynamic loads and forces, such as those experienced during acceleration, deceleration, and impacts. Further, inverted triangular structure can be designed to absorb and dissipate energy during collisions more effectively, enhancing occupant protection.

According to an example, the third component comprises at least one third rod connecting substantially middle of the first supporting member at one end to substantially one of two longitudinally extending edges along the lateral direction of the second component at the other end.

The second component may be arranged at a vertically higher point with respect to the first supporting member. Thus, the at least one third rod arranged according to the example above forms part of an inverted triangular structure, which improves handling of dynamic loads and forces, such as those experienced during acceleration, deceleration, and impacts. Further, inverted triangular structure can be designed to absorb and dissipate energy during collisions more effectively, enhancing occupant protection.

According to an example, the third component comprises at least one fourth rod connecting substantially one of two ends of the first supporting member at one end to substantially middle of the second component along the lateral direction at the other end.

The second component may be arranged at a vertically higher point with respect to the first supporting member. Thus, the at least one fourth rod arranged according to the example above forms part of a triangular structure, which improves structural stability. Further, such structure may distribute weight and stress evenly across the sides and vertices, reducing the risk of structural failure. Moreover, the triangular structure requires less material to achieve the same rigidity as other shapes, contributing to reduced weight and improved material usage.

According to an example, the third component comprises a second supporting member connecting the first side member to the second side member, connecting further to the second component, and extending along the lateral direction of the vehicle structure and along the vertical direction of the vehicle structure.

The second supporting member may extend along the lateral and the vertical directions of the vehicle structure comparatively more than an extension along the longitudinal direction. The second supporting member may be connected to substantially middle of the first side member and the second side member along the longitudinal direction of the body structure.

The body structure according to the example above achieves an improved mechanical rigidity and stability along the lateral and the vertical directions of the body structure.

According to an example, the third component comprises at least one fifth rod connecting substantially middle of the second supporting member at one end to substantially one of two longitudinally extending edges along the lateral direction of the first component at the other end.

The first component may be arranged at a vertically lower point with respect to the second supporting member. Thus, the at least one fifth rod arranged according to the example above forms part of a triangular structure, which improves structural stability. Further, such structure may distribute weight and stress evenly across the sides and vertices, reducing the risk of structural failure. Moreover, the triangular structure requires less material to achieve the same rigidity as other shapes, contributing to reduced weight and improved material usage.

According to an example, the third component comprises at least one sixth rod connecting substantially one of two ends of the second supporting member at one end to substantially middle of the first component along the lateral direction at the other end.

The first component may be arranged at a vertically lower point with respect to the second supporting member. Thus, the at least one second rod arranged according to the example above forms part of an inverted triangular structure, which improves handling of dynamic loads and forces, such as those experienced during acceleration, deceleration, and impacts. Further, inverted triangular structure can be designed to absorb and dissipate energy during collisions more effectively, enhancing occupant protection.

According to an example, the third component connects to substantially middle of the first component along the longitudinal direction of the body structure.

Connecting to the substantially middle of the first component allows for balanced load distribution across the first component. This minimizes bending moments and reduces stress concentrations, enhancing the structural integrity of the assembly.

According to an example, the third component connects to substantially middle of the first side member along the longitudinal direction of the body structure and to substantially middle of the second side member along the longitudinal direction of the body structure.

Connecting to the substantially middle of the first side member and of the second side member allows for balanced load distribution across the first side member and of the second side member. This minimizes bending moments and reduces stress concentrations, enhancing the structural integrity of the assembly.

According to an example, the third component connects to substantially one of two edges of the second component extending along the lateral direction of the of the body structure.

According to a second aspect of the present disclosure, there is provided a vehicle comprising the body structure of any one of the examples of the first aspect of the present disclosure.

The structural features of the first component, the second component, and the third component and connections thereof according to a first aspect of the present disclosure as above in particular contribute to providing a stiffness against shear forces extending in the longitudinal, lateral, and vertical direction. This in turn contributes to providing an overall stiffness at the front carrier of the vehicle, ensuring the safety of the occupant(s) of the vehicle. Further, the said components extend largely along two directions, largely reducing the size of the structural features with respect to conventional components extending substantially in all three directions. This contributes to reducing the weight of the front carriage of the vehicle, reducing the overall weight of the vehicle. This in turn improves the fuel and/or electrical efficiency of the vehicle. Further, the achieved reduced sizes of the conventional components translate to a sustainable solution.

Thus, the vehicle comprising such body structure according to the first aspect of the present disclosure achieves, among others, improved weight efficiency, sustainability, and stiffness.

It should be noted that the above examples may be combined with each other irrespective of the aspect involved.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: illustrates a vehicle according to an embodiment of the present disclosure comprising a body structure according to an embodiment of the present disclosure seen from a lateral side
- Figure 2: illustrates a front-view of the body structure according to an embodiment of the present disclosure shown in Figure 1
- Figure 3: illustrates a top-view of body structure according to an embodiment of the present disclosure as shown Figure 1
- Figure 4: illustrates a front-view of the body structure according to an embodiment of the present disclosure as shown in Figure 1, with a first example of the third component of the body structure in detail
- Figure 5: illustrates a front-view of the body structure according to an embodiment of the present disclosure as shown in Figure 1, showing a second example of the third component of the body structure in detail
- Figure 6: illustrates a front-view of the body structure according to an embodiment of the present disclosure as shown in Figure 1, showing a third example of the third component of the body structure in detail
- Figure 7: illustrates a front-view of the body structure according to an embodiment of the present disclosure as shown in Figure 1, showing a fourth example of the third component of the body structure in detail
- Figure 8: illustrates a front-view of the body structure according to an embodiment of the present disclosure as shown in Figure 1, showing a fifth example of the third component of the body structure in detail
- Figure 9: illustrates a front-view of the body structure according to an embodiment of the present disclosure as shown in Figure 1, showing a sixth example of the third component of the body structure in detail
- Figure 10: illustrates a detailed example of the body structure according to an embodiment of the present disclosure as shown in Figure 1
- Figure 11: illustrates a sub-part of the second component according to an embodiment of the present disclosure of the body structure as shown in Figure 10
- Figure 12: illustrates the third component according to an embodiment of the present disclosure of the body structure as shown in Figure 10
- Figure 13: illustrates the first component according to an embodiment of the present disclosure of the body structure as shown in Figure 10
- Figure 14: illustrates a top view of the body structure according to an embodiment of the present disclosure comprising bending lines
- Figure 15: illustrates a crumpled body structure of Figure 14 upon impact

### DETAILED DESCRIPTION

The Figures are merely schematic representations and serve only to illustrate examples of the disclosure. Identical or equivalent elements are in principle provided with the same reference signs.

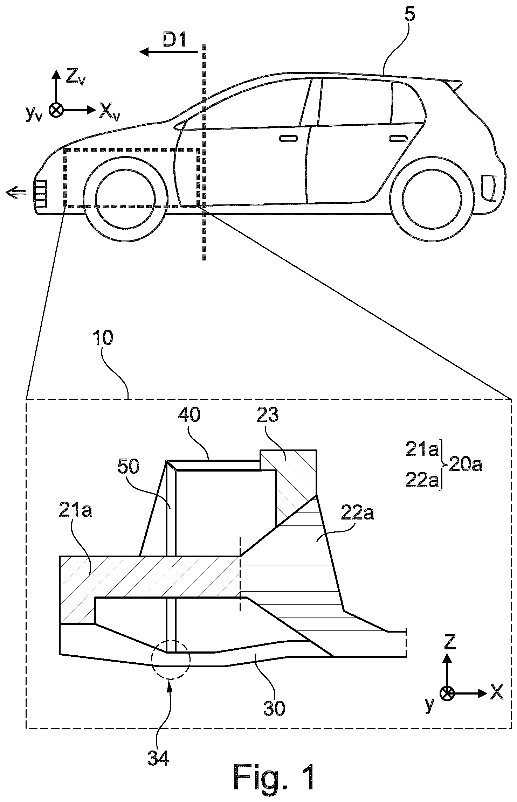

Figure 1 illustrates a vehicle 5.

The vehicle 5 comprises a front carriage of the vehicle 5, herein shown as part of the vehicle 5 in the first direction D1 of the vehicle 5, for illustrative purposes.

The vehicle 5 comprises a body structure 10 for the front carriage of the vehicle 5.

The body structure 10 is aligned with the orientation of the vehicle 5, i.e., a longitudinal axis of the vehicle 5 (Xᵥ-axis in Figure 1) is parallel to a longitudinal axis of the body structure 10 (x-axis in Figure 1), a lateral axis of the vehicle 5 (yᵥ-axis in Figure 1) is parallel to a lateral axis of the body structure 10 (y-axis in Figure 1), and a vertical axis of the vehicle 5 (zᵥ-axis in Figure 1) is parallel to the vertical axis of the body structure 10 (z-axis in Figure 1).

The body structure 10 comprises a first side member 20a, a second side member 20b, a first component, a second component, and a third component.

For illustrative purposes, the first side member 20a is shown to comprise a first portion 21a substantially extending along the longitudinal direction of the body structure 10, and a second portion 22a of substantially extending along the vertical direction of the body structure 10.

Similarly, the second side member 20b comprises a first portion 21b substantially extending along the longitudinal direction of the body structure 10, and a second portion 22b of substantially extending along the vertical direction of the body structure 10.

The second side member 20b overlaps with the first side member 20a seen from the lateral perspective of the body structure 10 as shown in Figure 1, thus is omitted in Figure 1.

The first side member 20a is connected to the second side member 20b by an upper member 23 substantially extending along the lateral direction of the body structure 10.

Herein, the first component, the second component, and the third component are respectively also referred to as the lower shear plane 30, the upper shear plane 40, and the middle shear plane 50, owing to the arrangement thereof along the vertical direction of the body structure 10.

The upper shear plane 40 extends substantially along the longitudinal and lateral directions of the body structure 10, the middle shear plane 50 extends substantially along the lateral and vertical directions of the body structure 10, and the lower shear plane 30 extends substantially along the lateral and longitudinal directions of the body structure 10, as evident from Figures 1 to 3.

The upper shear plane 40 is fastened to the upper member 23 of the body structure 10 and the vertically upper ends of the first side member 20a and the second side member 20b.

The lower shear plane 30 is fastened to the vertically lower ends of the first portion 21a and 21b of the respective first side member 20a and the second side member 20b, and the vertically lower ends of the second portion 22a and 22b of the respective first side member 20a and the second side member 20b.

The lower shear plane 30 comprises a bending portion 34 around substantially middle along the longitudinal direction of the body structure. The bending portion 34 is configured to bend or deform upon an impact beyond a threshold, e.g., upon a collision of the vehicle into another object.

The middle shear plane 50 is fastened to the bending portion 34 of the lower shear plane 30, such that the connection therebetween loosens upon said impact.

The middle shear plane 50 is further fastened to the upper shear plane 40, to substantially middle of the first side member 20a along the longitudinal direction, and to substantially middle of the second side member 20b along the longitudinal direction.

The first portion 21a of the first side member 20a, and the first portion 21b of the second side member 20b comprises three bend lines (not shown in figures) running along the vertical direction.

The three bend lines are spaced from one another along the longitudinal direction of the body structure.

The three bend lines are structurally weak points which are designed to bend, e.g., laterally, upon collision such that the impact is primarily absorbed by the first side member 20a and the second side member 20b, thereby reducing the impact transferred to the cabin of the vehicle 5.

The middle shear plane 50 is connected to one of the three bend lines on the respective first side member 20a and the second side member 20b, such that the connection therebetween loosens, or even becomes completely disconnected.

Such loosening or disconnecting upon impact prevents the stiff lower shear plane 30, upper shear plane 40, and middle shear plane 50 from transferring the impact to the cabin of the vehicle 5 where the occupants are.

That is, the three shear planes in combination provide mechanical stability and stiffness against shear forces extending in the combination of longitudinal, lateral, and vertical directions, to which the vehicle 5 is subjected during operation, including a collision. Simultaneously, the shear planes 30, 40, and 50 connecting to the structurally weak portions of the first and second side members 20a and 20b, allows, that upon collision, said connection is loosened or disconnected, resulting in reduced impact transferred to the cabin of the vehicle 5 by the stiff shear planes 30, 40, and 50.

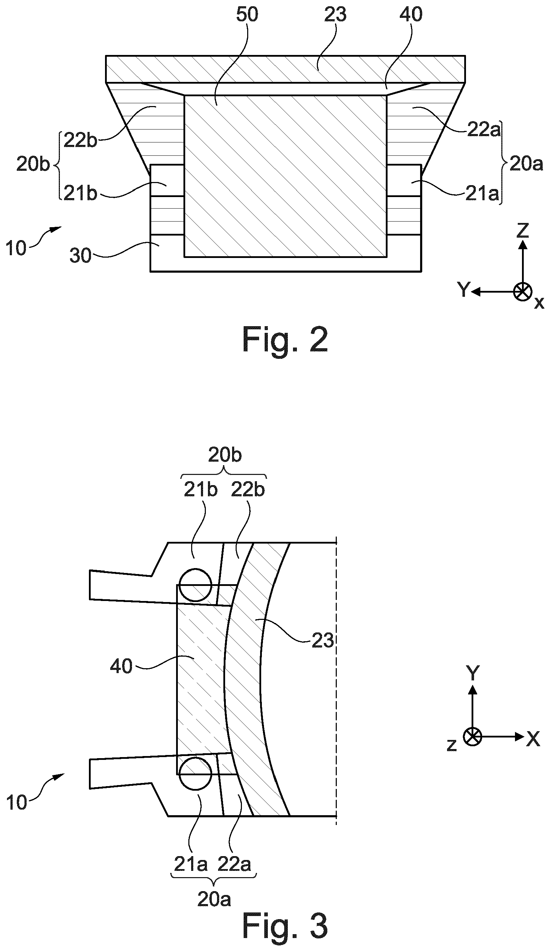

In reference to Figure 2, when seen from the front, the middle shear plane 50 forms a planar shape extending vertically between the upper shear plane 40 and the lower shear plane 30, and extending laterally between the first side member 20a and the second side member 20b.

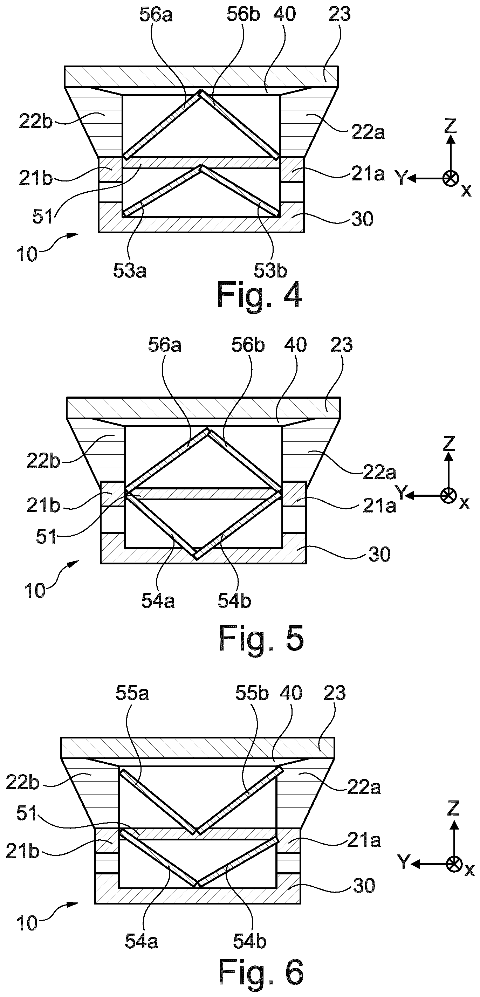

Alternative examples of the middle shear plane 50 seen from the front perspective are further elaborated in reference to Figures 4 to 8.

In reference to Figure 4, the middle shear plane 50 comprises a first supporting member 51 extending substantially along the lateral direction of the vehicle 5 structure. The first supporting member 51 connects the first side member 20a and the second side member 20b.

The middle shear plane 50 also comprises two first rods 53a and 53b respectively connecting substantially middle of the first supporting member 51 at one end to substantially respective longitudinally extending edges of the lower shear plane 30 at the other end.

The longitudinally extending edges of the lower shear plane 30 are spaced along the lateral direction of the body structure 10.

The first supporting member 51 is arranged vertically higher than the lower shear plane 30. As a result, the said arrangement of the two first rods 53a and 53b, in combination with the lower shear plane 30, forms a triangle form.

The middle shear plane 50 further comprises two fourth rods 56a and 56b respectively connecting substantially respective ends of the first supporting member 51 along the lateral direction at one end to substantially middle of the upper shear plane 40 along the lateral direction at the other end.

The first supporting member 51 is arranged vertically lower than the upper shear plane 40. As a result, the said arrangement of the two fourth rods 56a and 56b, in combination with the upper shear plane 40, forms a triangle form.

In reference to Figure 5, the middle shear plane 50 comprises a first supporting member 51 extending substantially along the lateral direction of the vehicle 5 structure. The first supporting member 51 connects the first side member 20a and the second side member 20b.

The middle shear plane 50 also comprises two second rods 54a and 54b respectively connecting substantially respective ends of the first supporting member 51 at one end to substantially middle of the lower shear plane 30 along the lateral direction at the other end.

The longitudinally extending edges of the lower shear plane 30 are spaced along the lateral direction of the body structure 10.

The first supporting member 51 is arranged vertically higher than the lower shear plane 30. As a result, the said arrangement of the two second rods 54a and 54b, in combination with the lower shear plane 30, forms an inverted triangle form.

The middle shear plane 50 further comprises two fourth rods 56a and 56b respectively connecting substantially respective ends of the first supporting member 51 along the lateral direction at one end to substantially middle of the upper shear plane 40 along the lateral direction at the other end.

The first supporting member 51 is arranged vertically lower than the upper shear plane 40. As a result, the said arrangement of the two fourth rods 56a and 56b, in combination with the upper shear plane 40, forms a triangle form.

In reference to Figure 6, the middle shear plane 50 comprises a first supporting member 51 extending substantially along the lateral direction of the vehicle 5 structure. The first supporting member 51 connects the first side member 20a and the second side member 20b.

The middle shear plane 50 also comprises two second rods 54a and 54b respectively connecting substantially respective ends of the first supporting member 51 at one end to substantially middle of the lower shear plane 30 along the lateral direction at the other end.

The longitudinally extending edges of the lower shear plane 30 are spaced along the lateral direction of the body structure 10.

The first supporting member 51 is arranged vertically higher than the lower shear plane 30. As a result, the said arrangement of the two second rods 54a and 54b, in combination with the lower shear plane 30, forms an inverted triangle form.

The middle shear plane 50 further comprises two third rods 55a and 55b respectively connecting respectively substantially middle of the first supporting member 51 at one end to substantially respective longitudinally extending edges of the upper shear plane 40 at the other end.

The longitudinally extending edges of the upper shear plane 40 are spaced along the lateral direction of the body structure 10.

The first supporting member 51 is arranged vertically lower than the upper shear plane 40. As a result, the said arrangement of the two third rods 55a and 55b, in combination with the upper shear plane 40, forms an inverted triangle form.

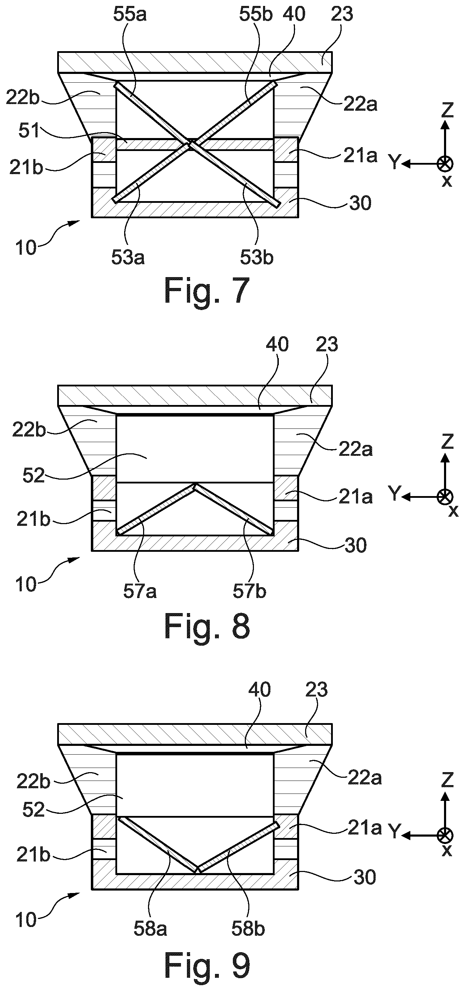

In reference to Figure 7, the middle shear plane 50 comprises a first supporting member 51 extending substantially along the lateral direction of the vehicle 5 structure. The first supporting member 51 connects the first side member 20a and the second side member 20b.

The middle shear plane 50 also comprises two first rods 53a and 53b respectively connecting substantially middle of the first supporting member 51 at one end to substantially respective longitudinally extending edges of the lower shear plane 30 at the other end.

The longitudinally extending edges of the lower shear plane 30 are spaced along the lateral direction of the body structure 10.

The first supporting member 51 is arranged vertically higher than the lower shear plane 30. As a result, the said arrangement of the two first rods 53a and 53b, in combination with the lower shear plane 30, forms a triangle form.

The middle shear plane 50 further comprises two third rods 55a and 55b respectively connecting respectively substantially middle of the first supporting member 51 at one end to substantially respective longitudinally extending edges of the upper shear plane 40 at the other end.

The longitudinally extending edges of the upper shear plane 40 are spaced along the lateral direction of the body structure 10.

The first supporting member 51 is arranged vertically lower than the upper shear plane 40. As a result, the said arrangement of the two third rods 55a and 55b, in combination with the upper shear plane 40, forms an inverted triangle form.

In reference to Figure 8, the middle shear plane 50 comprises a second supporting member 52 extending substantially along the lateral direction of the vehicle 5 structure, and along the vertical direction of the vehicle 5 structure. The second supporting member 52 connects the first side member 20a and the second side member 20b laterally. The second supporting member 52 is further connected to the upper shear plane 40.

The middle shear plane 50 also comprises two fifth rods 57a and 57b respectively connecting substantially middle of the first supporting member 51 at one end to substantially respective longitudinally extending edges of the lower shear plane 30 at the other end.

The longitudinally extending edges of the lower shear plane 30 are spaced along the lateral direction of the body structure 10.

The second supporting member 52 is arranged vertically higher than the lower shear plane 30. As a result, the said arrangement of the two fifth rods 57a and 57b, in combination with the lower shear plane 30, forms a triangle form.

In reference to Figure 9, the middle shear plane 50 comprises a second supporting member 52 extending substantially along the lateral direction of the vehicle 5 structure, and along the vertical direction of the vehicle 5 structure. The second supporting member 52 connects the first side member 20a and the second side member 20b laterally. The second supporting member 52 is further connected to the upper shear plane 40.

The middle shear plane 50 also comprises two sixth rods 58a and 58b respectively connecting substantially respective ends of the second supporting member 52 at one end to substantially middle of the lower shear plane 30 along the lateral direction at the other end.

The longitudinally extending edges of the lower shear plane 30 are spaced along the lateral direction of the body structure 10.

The second supporting member 52 is arranged vertically higher than the lower shear plane 30. As a result, the said arrangement of the two sixth rods 58a and 58b, in combination with the lower shear plane 30, forms an inverted triangle form.

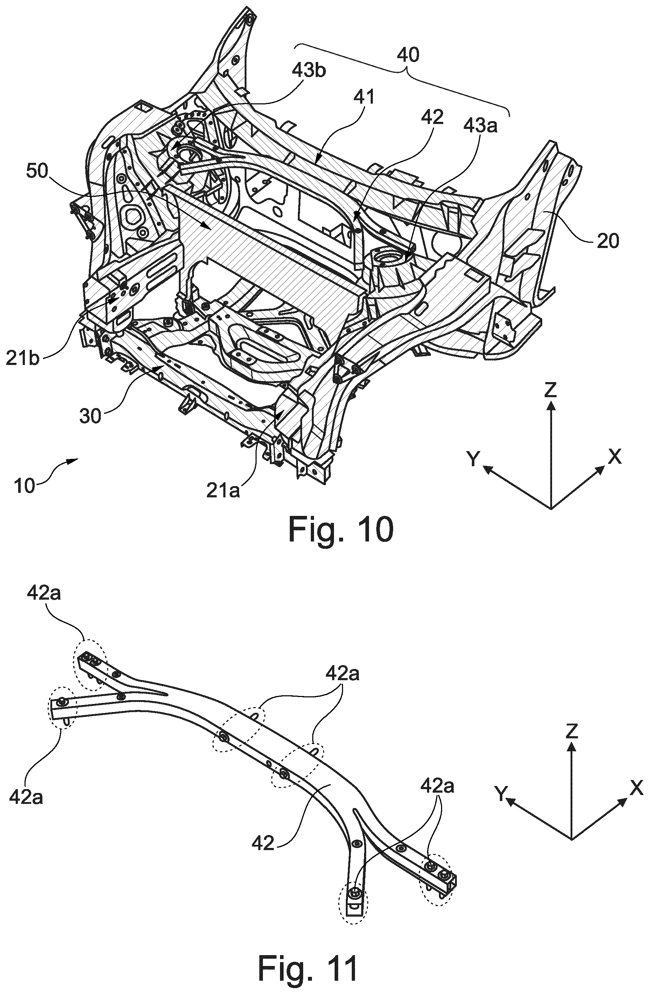

Figure 10 illustrates a detailed example of the body structure 10 as shown in Figure 1. Accordingly, the aforementioned structural features and arrangements thereof disclosed herein above apply, thus the commonly applicable features are not repeated here for brevity.

The upper shear plane 40 comprises a crowl, a strutbrace, and springtowers.

In reference to Figure 11, the strutbrace is fastened to the cowl and the spring towers by means of bolt j oints 42a. Such rigid connection may prevent from vibrations being transferred to a front windscreen of the vehicle 5, creating so called "in-vehicle 5 noise".

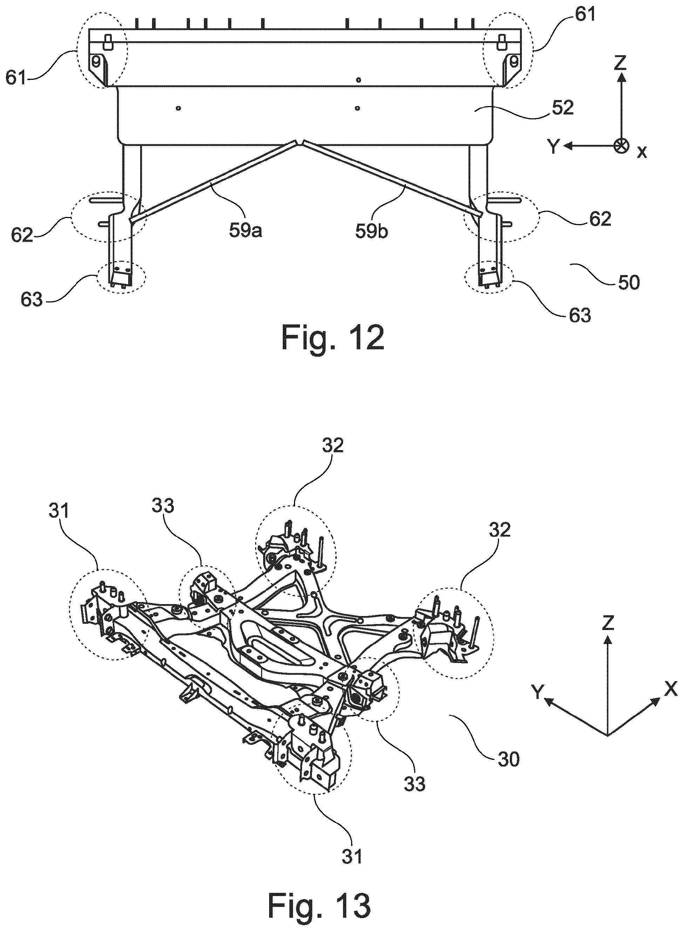

In reference to Figure 12, the middle shear plane 50 comprises a planar plate forming the top half of the middle shear plane 50, with first connectable portions 61 at the top-right and the top-left corners of the planar plate connectable to the upper shaper plane, specifically to the spring tower of the upper shear plane 40, for instance by means of bolt joints.

The lower half of the middle shear plane 50 comprises two legs extending along the vertical direction of the body structure 10, i.e., the z-axis as shown in Figure 12, from respective edges of the planar plate along the lateral direction of the body structure 10.

The two legs respectively comprise a second connectable portion 62 at substantially center of the respective legs along the vertical direction for connecting to the respective side members of the body structure 10, e.g., by means of bolt joints.

The two legs respectively comprise a third connectable portion 63 substantially at one end along the vertical direction, opposite to the end connected to the planar plate, for connecting to the lower shear plane 30, e.g., by means of bolt joints.

The lower half of the middle shear plane 50 further comprises two seventh rods 59a and 59b respectively connecting substantially middle of the planar plate along the lateral direction of the body structure 10 at one end, and substantially middle of the respective two legs along the vertical direction of the body structure 10 at the other end.

In reference to Figure 13, the lower shear plane 30 comprises first connectable portions 31 at substantially corners of one lateral edge of the lower shear plane 30 running along the lateral direction of the body structure 10, for connecting to the respective vertically lower ends of the first and second side member 20bs.

The lower shear plane 30 also comprises second connectable portions 32 at substantially corners of another lateral edge, opposite to the one lateral edge comprising the first connectable portions 31, of the lower shear plane 30 running along the lateral direction of the body structure 10 for connecting to the respective vertically lower ends of the first and second side members 20a and 20b.

The first connectable portions 31 and the second connectable portions 32 are distanced from one another along the longitudinal direction of the body structure 10.

The lower shear plane 30 further comprises third connectable portions 33 at substantially middle of respective longitudinal edges of the lower shear plane 30 running along the longitudinal direction of the body structure 10, for connecting to the respective third connectable portions 33 of the middle shear plane 50.

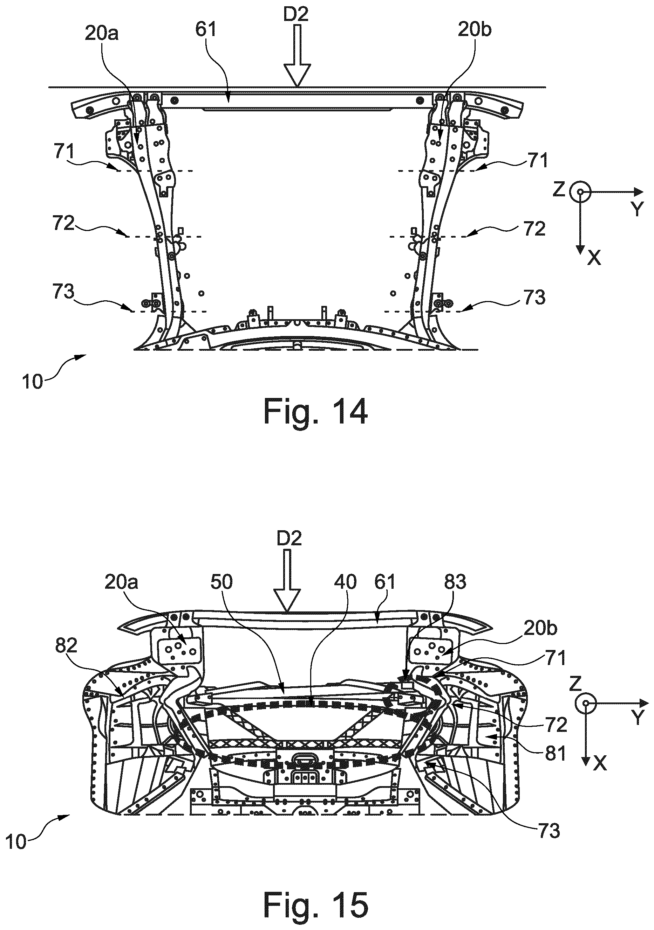

Figure 14 illustrates a top view of the body structure 10.

The body structure 10 comprises the first side member 20a and the second side member 20b, and a front bumper 61 connecting the first side member 20a to the second side member 20b at the respective longitudinally front edges, i.e., away from the cabin side of the vehicle 5, of the first side member 20a and the second side member 20b.

The first side member 20a and the second side member 20b respectively comprise bending lines 71, 72, and 73, spaced from one another along the longitudinal direction on the first side member 20a and the second side member 20b.

The first, second, and third bending lines 71, 72, and 73 are upon an impact beyond a threshold, thereby absorbing the impact, which otherwise would be transferred directly to the cabin of the vehicle 5.

For simplicity, the lower shear plane 30, the upper shear plane 40, and the middle shear plane 50 are omitted in Figure 14.

Figure 15 illustrates a process of crumpling or the end results of such process of the body structure shown in Figure 14.

For illustrative purposes, the body structure 10 in Figure 15 further comprises the upper shear plane 40, and the middle shear plane 50 as disclosed herein above.

The body structure 10 further comprises a front right wheelhouse 81, and a front left wheelhouse 82.

When the force going beyond the threshold is exerted onto the front bumper 61 in the second direction D2, the first side member 20a and the second side member 20b start to crumple.

Specifically, the first side member 20a and the second side member 20b start to fold along the bending lines 71, 72, and 73.

The first side member 20a and the second side member 20b bend laterally outwards, i.e., away from each other laterally, at the second bending line 72.

This leads to the connection between the middle shear plane 50 and the second side member 20b coming loose, as shown by a disconnected portion 83 in Figure 15.

Consequently, the impact is not transferred through the stiff middle shear plane 50 to the cabin side of the vehicle 5.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 5: Vehicle
- 10: body structure
- 20a: First side member
- 20b: Second side member
- 21a: First portion
- 21b: Second portion
- 22a: First portion
- 22b: Second portion
- 23: Upper member
- 30: First component
- 31: First connectable portions
- 32: Second connectable portions
- 33: Third connectable portions
- 34: Bending portion
- 40: Second component
- 41: First connectable portions
- 42: Second connectable portions
- 42a: bolt joints
- 43: Third connectable portions
- 50: Third component
- 51: First supporting member
- 52: Second supporting member
- 53a & 53b: First rods
- 54a & 54b: Second rods
- 55a & 55b: Third rods
- 56a & 56b: Fourth rods
- 57a & 57b: Fifth rods
- 58a & 58b: Sixth rods
- 59a & 59b: Seventh rods
- 61: Front bumper
- 71: First bending line
- 72: Second bending line
- 73: Third bending line
- 81: Right front wheelhouse
- 82: Left front wheelhouse
- 83: Disconnected portion
- D1: First direction
- D2: Second direction

## Claims

1. A body structure (10) for a front carriage of a vehicle (5), the body structure (10) comprising:
• a first side member (20a) arranged at a first lateral end of the body structure (10) and extending along a longitudinal direction of the body structure (10) and along a vertical direction of the body structure (10);
• a second side member (20b) arranged at a second lateral end of the body structure (10) extending along the longitudinal direction of the body structure (10) and along the vertical direction of the body structure (10), wherein the first lateral end and the second lateral end are opposite to one another;
• a first component (30) connecting a vertically lower end of the first side member (20a) and a vertically lower end of the second side member (20b), and extending along the longitudinal direction of the body structure (10) and along a lateral direction of the body structure (10) , such that the first component (30) can support shear forces extending in the longitudinal and/or lateral direction;
• a second component (40) connecting a vertically upper end of the first side member (20a) and a vertically upper end of the second side member (20b), and extending along the longitudinal direction of the body structure (10) and along the lateral direction of the body structure (10) , such that the second component (40) can support shear forces extending in the longitudinal and/or lateral direction; and
• a third component (50) connecting the first side member (20a) to the second side member (20b), and extending along the lateral direction of the body structure (10) and along the vertical direction of the body structure (10) , such that the third component (50) can support shear forces extending in the vertical and/or lateral direction.

2. The body structure (10) of claim 1, wherein the first component (30) comprises or is a deformable subframe connecting to the vertically lower end of the first side member (20a), connecting to the vertically lower end of the second side member (20b), and connecting to the third component (50), such that the connection is loosened upon deformation of the deformable subframe.

3. The body structure (10) of claim 1 or 2, wherein the third component (50) comprises a first supporting member (51) connecting the first side member (20a) to the second side member (20b), and extending in the lateral direction of the vehicle (5) structure.

4. The body structure (10) of claim 3, wherein the third component (50) comprises at least one first rod (53a, 53b) connecting substantially middle of the first supporting member (51) at one end to substantially one of two longitudinally extending edges along the lateral direction of the first component (30) at the other end.

5. The body structure (10) of claim 3, wherein the third component (50) comprises at least one second rod (54a, 54b) connecting substantially one of two ends of the first supporting member (51) at one end to substantially middle of the first component (30) along the lateral direction at the other end.

6. The body structure (10) of any one of claims 3 to 5, wherein the third component (50) comprises at least one third rod (55a, 55b) connecting substantially middle of the first supporting member (51) at one end to substantially one of two longitudinally extending edges along the lateral direction of the second component (40) at the other end.

7. The body structure (10) of any one of claims 3 to 5, wherein the third component (50) comprises at least one fourth rod (56a, 56b) connecting substantially one of two ends of the first supporting member (51) at one end to substantially middle of the second component (40) along the lateral direction at the other end.

8. The body structure (10) of claim 1 or 2, wherein the third component (50) comprises a second supporting member (52) connecting the first side member (20a) to the second side member (20b), connecting further to the second component (40), and extending along the lateral direction of the vehicle (5) structure and along the vertical direction of the vehicle (5) structure.

9. The body structure (10) of claim 8, wherein the third component (50) comprises at least one fifth rod (57a, 57b) connecting substantially middle of the second supporting member (52) at one end to substantially one of two longitudinally extending edges along the lateral direction of the first component (30) at the other end.

10. The body structure (10) of claim 9, wherein the third component (50) comprises at least one sixth rod (58a, 58b) connecting substantially one of two ends of the second supporting member (52) at one end to substantially middle of the first component (30) along the lateral direction at the other end.

11. The body structure (10) of any one of preceding claims, wherein the third component (50) connects to substantially middle of the first component (30) along the longitudinal direction of the body structure (10).

12. The body structure (10) of any one of preceding claims, wherein the third component (50) connects to substantially middle of the first side member (20a) along the longitudinal direction of the body structure (10) and to substantially middle of the second side member (20b) along the longitudinal direction of the body structure (10).

13. The body structure (10) of any one of preceding claims, wherein the third component (50) connects to substantially one of two edges of the second component (40) extending along the lateral direction of the of the body structure (10).

14. A vehicle (5) comprising the body structure (10) of any one of the preceding claims.
